# EUROPÄISCHE PATENTSCHRIFT

(11) **EP 3 754 328 B1**
(45) Veröffentlichungstag und Bekanntmachung des Hinweises auf die Patenterteilung: **29.05.2024**
(21) Anmeldenummer: 20178646.4
(22) Anmeldetag: 08.06.2020
(51) Int. Cl.: G01N 23/201, G21K 1/10

(54) **VORRICHTUNG ZUM JUSTIEREN UND WECHSELN VON STRAHLFÄNGERN**
DEVICE FOR ADJUSTING AND CHANGING BEAM CATCHERS
DISPOSITIF D'AJUSTEMENT ET DE CHANGEMENT DE RÉCEPTEURS DE RAYONNEMENT

(30) Priorität: 18.06.2019 DE 102019208834
(43) Veröffentlichungstag der Anmeldung: 23.12.2020
(73) Patentinhaber: Bruker AXS GmbH, 76187 Karlsruhe (DE)
(72) Erfinder: Gehrlein, Wolfgang, 76761 Rülzheim (DE)
(74) Vertreter: Kohler Schmid Möbus Patentanwälte

(56) Entgegenhaltungen:
- EP-A1- 3 441 981
- WO-A1-96/42088
- KR-B1- 101 608 669
- Lcls: "ENGINEERING SPECIFICATION DOCUMENT (ESD) R0 LUSI SUB-SYSTEM XCS Detector Mover LUSI XCS Large Angle Detector Mover Engineering Specification", , 13. April 2009 (2009-04-13), XP055753100, Gefunden im Internet: URL:https://www-ssrl.slac.stanford.edu/lcl s/reviews/lusi/2009_xcs_fidr_june17/docume nts/ESDs/sp39100131-0_XCS_LADM-ESD.pdf [gefunden am 2020-11-23]
- Hendrik Lindemann: "Entwicklung eines Positioniersystems für ein Absorptionselement im Hochvakuum", Masterarbeit, 1. Januar 2018 (2018-01-01), Seiten I-X, 1-117, XP055712843, DOI: 10.3204/PUBDB-2018-02731 Gefunden im Internet: URL:https://bib-pubdb1.desy.de/record/4082 48/files/Masterthesis%20Hendrik%20Lindeman n.pdf [gefunden am 2020-07-08]
- Z. BU ET AL: "A Small-Angle X-ray Scattering Apparatus for Studying Biological Macromolecules in Solution", JOURNAL OF APPLIED CRYSTALLOGRAPHY, Bd. 31, Nr. 4, 1. August 1998 (1998-08-01) , Seiten 533-543, XP055022431, ISSN: 0021-8898, DOI: 10.1107/S0021889897015422

## Beschreibung

Die Erfindung betrifft eine Strahlfänger-Anordnung für ein röntgenoptisches System mit mindestens einem in einer xy-Ebene senkrecht zu einer z-Richtung justierbaren Strahlfänger zur optimalen Einstellung des Verhältnisses von auf eine Fläche gelangender Nutzstrahlung zur Störstrahlung eines Röntgenstrahls in z-Richtung, wobei die Strahlfänger-Anordnung eine Mehrzahl von Strahlfängern unterschiedlicher Größe und/oder Geometrie aufweist, welche auf einem Wechselträger angeordnet sind, der auf einem mittels einer Antriebseinrichung mit mindestens zwei Stellmotoren in der xy-Ebene verschiebbaren Schlitten montiert ist.

Eine gattungsgemäße Strahlfänger-Anordnung ist beispielsweise durch die US 7,295,650 B2 beziehungsweise die US 2004/0206908 A1 (= Referenz [1]) bekannt geworden.

### Hintergrund der Erfindung

Die vorliegende Erfindung betrifft allgemein den Bereich der Röntgen-optischen Systeme, speziell Strahlfänger-Anordnungen (="Beamstops") für den primären Röntgenstrahl.

Zur Untersuchung der Eigenschaften, etwa Materialeigenschaften, von Proben werden röntgenoptische Verfahren eingesetzt. Ein gebündelter Röntgen- oder Neutronenstrahl wird dazu auf die Probe gelenkt, wo er mit der Probe auf vielfältige Weise wechselwirkt, insbesondere durch Streuung, Beugung und Reflektion bei streifendem Einfall. Die gebeugte Röntgenstrahlung nach dem Wechselwirkungsprozess wird durch einen Röntgen-Detektor registriert und anschließend ausgewertet, um auf Eigenschaften der Probe rückzuschließen.

Bei vielen dieser Verfahren unterliegt nur ein kleiner Teil der primären Röntgenstrahlung aus einer Röntgen-Quelle einer Richtungsablenkung. Der weitaus größte Teil der Strahlung passiert die Probe unabgelenkt. Der unabgelenkte Teil der Strahlung wird Primärstrahl genannt, sowohl vor als auch hinter der Probe. In der Regel müssen Detektoren zur Registrierung von gebeugter oder gestreuter Strahlung vor der direkten Einwirkung des Primärstrahls geschützt werden, um irreversible Beschädigungen am Detektor zu vermeiden. Dazu werden Strahlfänger eingesetzt, die den Detektor größtenteils abschatten, um einen schädigenden Einfall von Primärstrahlung zu verhindern. Ein Strahlfänger kann auch störende divergente parasitäre Strahlung abschatten.

Ein Strahlfänger des bekannten Standes der Technik kann z.B. aus einem Plättchen aus Gold oder Blei oder einer Legierung aus hochabsorbierendem Elementen bestehen, welches durch Kaptonfäden in einem Stahlring fixiert ist. Die Position des Goldplättchens in einer Ringebene (xy-Ebene) kann über zwei Mikrometerschrauben justiert werden. Der Stahlring wird am Detektor angeflanscht.

Das Profil des Primärstrahls, insbesondere sein Durchmesser, ist von verschiedenen Einflussfaktoren abhängig. Zum einen weisen die verwendeten Komponenten wie Blenden oder Strahloptiken gewisse endliche Fertigungstoleranzen auf. Zum anderen gibt es auch zeitlich veränderliche Eigenschaften der Strahloptik, etwa Temperatureinflüsse, Alterungserscheinungen, oder veränderliche experimentelle Aufbauten.

Um den Detektor unter diesen Umständen ausreichend zuverlässig vor dem Primärstrahl schützen zu können, muss ein relativ großer Strahlfänger eingesetzt werden, der auch einen Teil der im Bereich der sogenannten Kleinwinkelstreuung (ca. 0,05° und 14°, insbesondere zwischen 0,1° und 5° Strahlablenkung) anfallenden Strahlung abschattet, wodurch Informationen über die Probe verloren gehen können. Alternativ ist es möglich, den Strahlfänger iterativ einer gegebenen Strahloptik anzupassen. In diesem Falle können aber veränderliche Eigenschaften der Strahloptiken nicht korrigiert werden.

Bei den meisten Röntgenbeugungssystemen, auch bei SAXS (=Small Angle X-ray Scattering) Systemen, mit 1D- oder 2D-Detektoren, werden Direktstrahlfänger (="Beamstops") verwendet, um zu verhindern, dass der direkte Primär-Röntgenstrahl, der von der Probe teilweise gebeugt/gestreut wird, den Detektor trifft. Insbesondere bei SAXS Systemen überlappen der Detektorbereich mit dem Primärstrahl, da Probenstreusignal in unmittelbarer Nähe des Primärstrahls gemessen werden soll. Der Strahlfänger verhindert, dass der Detektor gesättigt oder zerstört wird oder andere negative Beeinflussungen des Messsignals im Detektor stattfinden.

Speziell bei SAXS Systemen wird der Strahlpfad evakuiert, um das schwache SAXS Signal der Probe nicht durch Luftstreuungssignale zu stören oder zu verfälschen. Auch der Strahlfänger befindet sich im Vakuum zwischen dem Primärstrahl und dem Detektor (direkt vor der sensitiven Detektorfläche).

Moderne SAXS Geräte, wie etwa der "NanoStar" der Anmelderin (siehe Referenz [2]), verfügen über mehrere verstellbare Blenden mit unterschiedlichen Öffnungen im Primärstrahlpfad (Primärstrahl vor der Probe). Die Größe des Röntgenstrahls kann somit auf die Probe oder die geforderten Anforderungen (z.B. Auflösung) angepasst werden. Dementsprechend ist es notwendig, den Beamstop an die Größe des Direktstrahls am Detektorort anzupassen. Daher wird ein Satz von Lochblenden unterschiedlicher Größe bereitgestellt, die vorzugsweise automatisch gewechselt werden können. Zu jeder Lochblendenkombination ist ein Direktstrahlfänger mit angepasster Größe notwendig, sodass möglichst der gesamte Direktstrahl abgeschirmt wird und noch gleichzeitig Streusignalmessungen bis zu kleinsten Winkeln ermöglicht werden.

Darüber hinaus muss jeder Beamstop präzise im Primärstrahl positioniert werden können. Ziel ist es, zu jeder Primärstrahl-Lochblendenkombination möglichst viel Intensität des Direktstrahls mit dem Beamstop zu absorbieren und gleichzeitig Streusignalmessungen bis zu kleinsten Winkeln zuzulassen.

Im aktuellen NanoSTAR (Referenz [2]) ist die Problemstellung wie folgt gelöst: Der Beamstop ist an zwei dünnen Kaptonfäden, die senkrecht zueinander ausgerichtet sind, aufgehängt. Dazu ist der Beamstop durchbohrt und die Fäden durchgezogen und verklebt. Die Fäden sind an einem Ende mit Federn gespannt. Am anderen Ende des jeweiligen Fadens ist eine Einstelleinrichtung, sodass der Beamstop an der gewünschten Position vor den Detektor positioniert ist. Durch Spannen oder Entspannen der Fäden kann der Beamstop in einem kleinen Bereich entlang der Fadenrichtungen bewegt und dadurch genau in der Strahlrichtung positioniert werden.

Nachteilig bei dieser Art der Anordnung ist jedoch, dass der Strahlfänger nur eine vorgegebene Größe haben kann. Wenn man den Primärstrahl aufweiten will, etwa durch eine entsprechende Blendeneinstellung, so hat man nicht dann die Möglichkeit, einen Strahlfänger in einer anderen Größe zu wählen.

Die WO 96/42088 A1 (= Referenz [3]) offenbart die Anordnung einzelner Strahlfänger entlang des Umfangs eines drehbaren Trägers, welcher einem Trägerrad gemäß der vorliegendem Erfindung in seiner Funktion ähnlich ist.

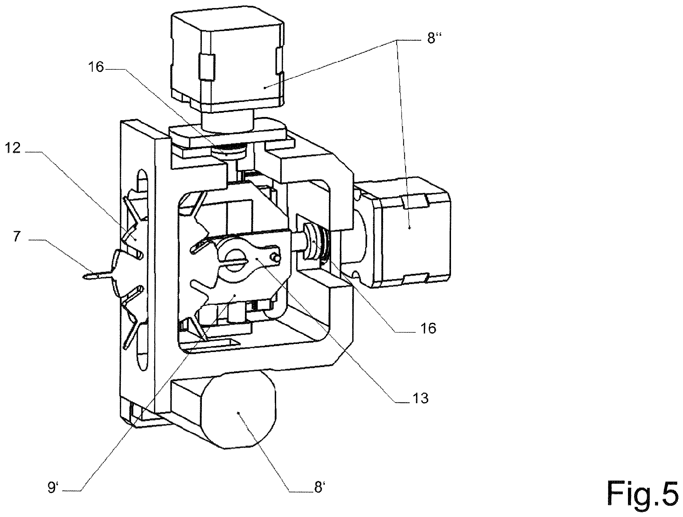

In der Publikation von Hendrik Lindemann: "Entwicklung eines Positioniersystems für ein Absorptionselement im Hochvakuum", Masterarbeit, 1. Januar 2018 (2018-01-01), Seiten I-X, 1-117, XP055712843, D01: 10.3204/PUBDB-2018-02731 (= Referenz [4]) ist unter 5.5 ein Beamstop System beschrieben, welches mitsamt den Stellmotoren (hier: "sehr kleiner Schrittmotor") im Vakuumbereich angeordnet ist (siehe insbesondere Abb. 5-27 Bezugsziffer 6).

In der eingangs zitierten Referenz [1] wird ein Strahlfänger für Röntgendiffraktometer beschrieben, der entlang des Strahlengangs (also in z-Richtung) verschiebbar ist. Zwischen der Probe und dem Detektor ist ein Strahlfänger vorgesehen, dessen Querschnittsform senkrecht zur z-Richtung an den Querschnitt des Primärstrahls angepasst ist. Der Strahlfänger ist zur optimalen Einstellung des Verhältnisses der auf den Detektor gelangenden Nutzstrahlung zur Störstrahlung entlang der z-Richtung verschiebbar angeordnet. Dieser Strahlfänger ist nur bedingt geeignet für den Einsatz im Vakuum eines SAXS Geräts. Auch hier hat der Strahlfänger jeweils nur eine vorgegebene Größe.

### Aufgabe der Erfindung

Der vorliegenden Erfindung liegt demgegenüber die Aufgabe zugrunde, eine Strahlfänger-Anordnung der eingangs definierten Art bereitzustellen, bei der ein Positionier- und Wechselsystem für mehrere Strahlfänger (unterschiedlicher Größe) vorhanden ist, das im Vakuum automatisiert justiert werden kann und womit ein Wechsel der Strahlfänger verschiedener Größen ermöglicht wird. Die Antriebsmotoren sollten jedoch außerhalb des Vakuums positioniert sein, damit die technischen Anforderungen an die Motoren niedrig gehalten werden.

### Kurze Beschreibung der Erfindung

Diese -im Detail betrachtet relativ anspruchsvolle und komplexe- Aufgabe wird durch die vorliegende Erfindung auf ebenso überraschend einfache wie wirkungsvolle Weise dadurch gelöst, dass der Schlitten mit dem Wechselträger im Vakuum und die Stellmotoren der Antriebseinrichung in einem Bereich mit Raumdruck angeordnet sind, wobei sich der Schlitten und der bewegliche Wechselträger innerhalb eines Vakuumgehäuses befinden, während die Stellmotoren bei Raumdruck außerhalb am Gehäuse angebracht sind, und dass die Stellmotoren die Antriebsbewegung des Schlittens über Stellglieder, insbesondere Stößel, vom Raumdruckbereich ins Vakuum übertragen, wobei Dichtungen am Vakuumgehäuse am Übergangsbereich von Raumdruck zum Vakuum vorhanden sind, mittels denen die Stellglieder abgedichtet sind. Die Strahlfänger-Anordnung weist eine Mehrzahl von Strahlfängern unterschiedlicher Größe und/oder Geometrie auf, welche auf dem Wechselträger angeordnet sind, der auf dem mittels der Antriebseinrichung mit zwei Stellmotoren in der xy-Ebene verschiebbaren Schlitten montiert ist.

Eines der Merkmale der vorliegenden Erfindung ist, dass der Primärstrahlengang, also der Röntgenstrahl vor der Messprobe, variiert werden kann, was mit sich bringt, dass vor dem Detektor entsprechend anpassbare Strahlfänger unterschiedlicher Größe eingebracht werden müssen. Die vorliegende Erfindung betrifft also eine automatisierbare Wechselvorrichtung für Strahlfänger (Beamstops), die im Vakuumbereich angeordnet ist, während die Stellmotoren jeweils außerhalb des Vakuums bei Raumdruck angeordnet sind.

Mit der vorliegenden Erfindung werden insbesondere folgende weiteren Vorteile erzielt:
1. Die Beamstops unterschiedlicher Größe können sehr genau reproduzierbar gewechselt werden.
2. Die Beamstops können in 2 Richtungen, die senkrecht zur Getriebeachse stehen, verschoben (senkrecht zur Direktstrahlrichtung) und präzise auf dem Primärstrahl ausgerichtet werden.
3. Alle Antriebsmotoren liegen außerhalb des Vakuums und damit sind keine vakuumtauglichen Motoren notwendig.
4. Es werden keine elektronischen Bauteile im Vakuum benötigt

### Bevorzugte Ausführungsformen und Weiterbildungen der Erfindung

Die gezielte Abschattung des Primärstrahls durch die erfindungsgemäße Strahlfänger-Anordnung wird mittels teilweisem Auffangen oder Abblenden des Röntgenstrahls mit Hilfe von für Röntgenstrahlung undurchlässigem oder zumindest nur teildurchlässigem Material bewirkt.

Ein Strahlfänger mit einem teildurchlässigen Material bietet die Möglichkeit zur Nachmessung der Strahlstärke der Quelle, da ausgehend von der Strahlintensität auf den Detektor rückgerechnet werden kann, welche Intensität von der Röntgenquelle ausgeht, im Effekt also eine Strahl-Qualitätskontrolle ermöglicht wird.

Der erfindungsgemäße Strahlfänger ist also aus einem die Strahlung stark absorbierenden Material aufgebaut, insbesondere aus Au und/oder Sb und/oder Pb und/oder W und/oder Bi und/oder Ta und/oder Pt und/oder Ir. Damit kann der Strahlfänger relativ dünn und leicht ausgebildet werden, was dessen Justage erleichtert.

Eine bevorzugte Ausführungsform sieht vor, dass zur Positionierung jeweils eines ausgewählten Strahlfängers im Strahlengang des Röntgen-optischen Systems ein Antrieb mit Stellmotor, vorzugsweise mit DC-Motor, vorhanden ist, und dass der Schlitten mit dem Wechselträger sowohl in x- als auch in y-Richtung linear verschiebbar ist. Dadurch kann nicht nur der Durchmesser, sondern auch die Position des Schattenwurfs des Strahlfängers in der Detektorebene eingestellt werden. Durch die motorische Verfahrbarkeit des Strahlfängers kann die Justage maschinell und leicht automatisierbar sowie mit großer Präzision durchgeführt werden.

Der bewegliche Wechselträger befindet sich hierbei auf einem Kreuzschlitten, der in X- und Y-Richtung (also parallel zur Detektorebene und senkrecht zur z-Achse) translatorisch verschiebbar ist, wobei die z-Richtung die Richtung des Direktstrahls (senkrecht auf die Detektorebene) ist. Damit kann der ausgewählte Beamstop auf die Position des Direktstrahls angepasst werden. Der Schlitten und der bewegliche Wechselträger befinden sich innerhalb des Vakuumgehäuses, während die Stellmotoren (Φ, X- und Y-Verstellung) bei Raumdruck außerhalb am Gehäuse angebracht sind. Die Stellglieder (Stößel) der Stellmotoren übertragen die Bewegung ins Innere des Vakuumgehäuses, und verschieben die darin befindlichen Schlitten. Die Stößel sind mit von außen montierbaren Dichtungen gegenüber dem Raumdruck abgedichtet.

Vorteilhaft ist es weiterhin eine Ausführungsform, wenn der Strahlfänger eine runde, vorzugsweise eine kreisförmige Querschnittsform aufweist. In der Regel sind die Querschnitte von Primärstrahl und parasitärer Streustrahlung ebenfalls rund ausgeformt, so dass in diesem Fall der Strahlfänger in seiner Querschnittsform dem Regelfall angepasst ist. Der Strahlfänger kann aber auch eine Kegelstumpf-ähnliche Form aufweisen. Die Kegelachse ist dabei an der Strahlachse ausgerichtet, und die breitere Kegelstumpfseite ist der Quelle bzw. der Probe zugewandt. In diesem Fall definiert die breite Kegelstumpfseite mit ihrem Rand eine scharfe Grenze des abgeschatteten Bereichs im Strahlengang. Wechselwirkungen von Strahlung mit der Kegelmantelfläche sind weitgehend ausgeschlossen oder können als gering angenommen werden.

Bei bevorzugten Ausführungsformen der Erfindung ist ein Rastmechanismus zur hoch-präzisen Festlegung einer gewählten Position des Wechselträgers vorhanden. Für den Antrieb des Rastmechanismus reicht ein DC-Motor.

Die unterschiedlich dimensionierten Strahlfänger befinden sich vorzugsweise auf einem drehbaren Wechselträger. Durch Drehen des Trägers um einen bestimmten Winkel Φ wird der ausgewählte Strahlfänger in den Strahlengang geführt.

Eine besonders vorteilhafte Klasse von Ausführungsformen der erfindungsgemäßen Strahlfänger-Anordnung sieht deshalb vor, dass der Wechselträger ein drehbares Trägerrad umfasst, an dessen Umfang mehrere Strahlfänger von jeweils unterschiedlicher Größe und/oder Geometrie angeordnet sind. Die Drehung des Trägerrads kann durch ein Schrittgetriebe realisiert werden.

Vorteilhaft sind Weiterbildungen dieser Klasse von Ausführungsformen, bei denen ein Malteserkreuz-Getriebe mit vorzugsweise einem DC-Elektromotor zum Antrieb des Trägerrads vorhanden ist, da man mit dem Malteserkreuz-Getriebe eine präzise Winkeleinstellung erhält, wenn der Antriebsmotor eine Umdrehung des Getriebes fährt.

Diese Weiterbildungen können noch dadurch verbessert werden, dass das Malteserkreuz-Getriebe zusätzlich über eine Kupplung mit Radialversatz, bevorzugt eine Kreuzschieberkupplung oder ein Kardangelenk, angetrieben ist.

Besonders vorteilhaft ist eine Weiterbildung dieser Klasse von Ausführungsformen, bei der ein Zahnradgetriebe mit Rastpositionen und vorzugsweise einem DC-Elektromotor zum Antrieb des Trägerrads vorhanden ist. Vorteilhaft ist darüber hinaus, ein spielfreies Zahnradgetriebe zu verwenden, jedoch muss dieses Getriebe nicht zwingend spielfrei sein, da durch die Rastposition die Funktion der Spielfreiheit gewährleistet wird. Ein spielfreies Zahnradgetriebe wäre hier deutlich komplexer und teurer.

Bei alternativ zu der oben beschriebenen Klasse von Ausführungsformen weitergebildeten Varianten der erfindungsgemäßen Strahlfänger-Anordnung umfasst der Wechselträger eine vorspannbare Band- oder Kettenvorrichtung, auf der die Strahlfänger montiert sind. Vorzugsweise ist hier ein Rastrad zum Antrieb vorhanden, wodurch die Winkelposition fixiert werden kann. Vorteilhaft an dieser Ausführung ist auch, dass durch die Federvorspannung des Spannrads das Band (Kette oder Riemen) immer auf Spannung gehalten werden kann, wenn die Stellmotoren den Schlitten ausrichten. Eine Kreuzschlitzkupplung ist nicht erforderlich, denn das Antriebsrad befindet sich nicht auf dem Schlitten. Durch eine entsprechende Übersetzung vom Antriebsrad, das durch einen Servomotor angetrieben wird, zum Strahlfänger-Trägerrad, kann eine feinere Justierung der Strahlfänger ermöglicht werden.

Auf jeden Fall sollte gewährleistet sein, dass die Stellmotoren zum Antrieb der erfindungsgemäßen Strahlfänger-Anordnung außerhalb des Vakuums positioniert sind und die Beamstops im Strahlengang, also im Vakuum angeordnet sind. Die verwendeten (Schritt-) Motoren erzeugen nämlich im Betrieb Wärme, was sich einer Anordnung im Vakuum negativ auf die empfindliche SAXS Messung auswirken würde.

Vorteilhaft sind daher Ausführungsformen der Erfindung, die sich dadurch auszeichnen, dass der Schlitten mit dem Wechselträger im Vakuum und die Stellmotoren der Antriebseinrichung in einem Bereich mit Raumdruck angeordnet sind, und dass die Stellmotoren die Antriebsbewegung des Schlittens über Stellglieder, insbesondere Stößel, vom Raumdruckbereich ins Vakuum übertragen, wobei die Stellglieder mit, vorzugsweise von außen montierbaren, Dichtungen am Übergangsbereich von Raumdruck zum Vakuum abgedichtet sind.

Wenn das oben beschriebene Schrittgetriebe durch einen im Vakuum eingebauten Motor ersetzt wird, kann zwar prinzipiell auf einen Antrieb verzichtet werden. Dann muss jedoch die Rotation sehr genau sein. Das könnte etwa durch einen Piezo-Motor realisiert werden. Die dann noch notwendige Translationsbewegung könnte dann auch durch einen im Vakuum eingebauten Motor angetrieben werden.

In den Rahmen der vorliegenden Erfindung fällt auch ein Röntgen-optisches System, insbesondere ein Röntgen-Diffraktometer, mit einer Röntgen-Quelle, von der Röntgenstrahlung als Primärstrahl auf eine zu untersuchende Probe geführt wird, mit einem Röntgen-Detektor zum Empfang von an der Probe gebeugter oder gestreuter Röntgenstrahlung, wobei die Röntgen-Quelle, die Probe und der Röntgen-Detektor auf einer z-Achse angeordnet sind, und wobei zwischen der Probe und dem Röntgen-Detektor ein Strahlfänger der oben beschriebenen erfindungsgemäßen Art vorhanden ist. Wie bereits oben erklärt, sind der Schlitten mit dem Wechselträger im Vakuum und die Stellmotoren der Antriebseinrichung in einem Bereich mit Raumdruck angeordnet, wobei sich der Schlitten und der bewegliche Wechselträger innerhalb eines Vakuumgehäuses befinden, während die Stellmotoren bei Raumdruck außerhalb am Gehäuse angebracht sind. Die Stellmotoren übertragen die Antriebsbewegung des Schlittens über Stellglieder, insbesondere Stößel, vom Raumdruckbereich ins Vakuum, wobei Dichtungen am Vakuumgehäuse am Übergangsbereich von Raumdruck zum Vakuum vorhanden sind, mittels denen die Stellglieder abgedichtet sind.

Bei einer besonders bevorzugten Ausführungsform ist das erfindungsgemäße System zur Messung von Kleinwinkel-Streuung insbesondere zwischen 0,05° und 14°, vorzugsweise zwischen 0,1° und 5°, eingerichtet. In diesem Fall ist eine genaue Ausblendung der Störstrahlung von Primärstrahl und divergenter parasitärer Strahlung besonders vorteilhaft, um den größtmöglichen Informationsgehalt der detektierten Nutzstrahlung zu gewährleisten, denn die Nutzstrahlung bei Kleinwinkelstreuexperimenten ist vornehmlich strahlnah gebeugte Strahlung.

Besonders vorteilhafte Varianten des Röntgen-optischen Systems zeichnen sich dadurch aus, dass die Strahlfänger-Anordnung auf der z-Achse unmittelbar vor dem Röntgen-Detektor positioniert ist.

Des Weiteren ist es von Vorteil, wenn eine Ausrichtungsvorrichtung vorhanden ist, mit welcher die Stellmotoren der Strahlfänger-Anordnung den jeweils ausgewählten Strahlfänger im Röntgenstrahl positionieren können.

Bevorzugt ist bei dem erfindungsgemäßen Röntgen-optischen System eine Auswerteeinheit vorhanden, mit der die Intensität der auf einer ausgewählten Detektorfläche des Röntgen-Detektors eintreffenden Röntgenstrahlung bei einer bestimmten Position des ausgewählten Strahlfängers der Strahlfänger-Anordnung ausgewertet werden kann. Damit ist das System nach vorgebbaren Kriterien automatisch justierbar. Insbesondere kann die automatische Justage nach jeder Veränderung des experimentellen Aufbaus oder vor jeder Messung durchgeführt werden. Es werden dann unter optimalen Bedingungen die Messungen durchgeführt. Typische Kriterien sind zum Beispiel das Unterschreiten einer gewissen oberen Grenzleistung von Strahlung am Detektor.

Bevorzugt sind auch Ausführungsformen des Röntgen-optisches Systems, die sich dadurch auszeichnen, dass im Primärstrahlpfad vor der Probe mehrere verstellbare Blenden mit unterschiedlichen Öffnungen angeordnet sind.

Vorteilhaft ist weiterhin eine Ausführungsform des erfindungsgemäßen Systems, bei der die dem einfallenden Strahl zugewandte Fläche des Strahlfängers konkav gestaltet ist. Die Strahlung fällt dann näherungsweise senkrecht auf die Oberfläche des Strahlfängers, und eine hohe Absorption der Strahlung wird erreicht.

Eine andere bevorzugte Ausführungsform sieht vor, dass der Detektor ein Ein-Element-Detektor (nulldimensionaler Detektor) ist, der einen definierten Winkelbereich um eine Achse senkrecht zur z-Achse abfahren kann. Ein-Element-Detektoren sind besonders preisgünstig und zuverlässig.

Bei einer alternativen Ausführungsform ist der Detektor ein eindimensionaler Detektor. Durch diesen kann eine Steigerung der Messgeschwindigkeit bei Vermessen eines Winkel- bzw. Raumwinkelbereiches erreicht werden.

Noch größere Messgeschwindigkeiten bei Vermessung eines Raumwinkelbereiches werden bei einer weiteren, besonders bevorzugten, alternativen Ausführungsform erreicht, die dadurch gekennzeichnet ist, dass der Detektor ein zweidimensionaler Flächendetektor ist, wobei die Detektorfläche im Wesentlichen senkrecht zur z-Richtung angeordnet ist. Flächendetektoren sind besonders empfindlich.

Die oben beschriebenen Ausführungsformen, Varianten und Weiterbildungen der Erfindung haben unter anderem folgende Vorteile:
Mehrere sehr einfach aufgebaute und stabile Beamstop-Teile können in den Strahlengang eingeschoben werden.

Die Beamstops können sehr genau reproduzierbar in den Röntgenstrahl eingefahren und gewechselt werden.

Die Beamstop können in 2 Richtungen die senkrecht zur Röntgenstrahlachse motorisiert verschoben werden.

Durch die Motorisierung kann eine Selbstzentrierung durchgeführt werden. Beispielsweise wird die Zentrierung mit Hilfe des Detektors durchgeführt, wobei der Schlitten mit dem entsprechend ausgewählten Strahlfänger in dem Strahl in der xy-Ebene bewegt wird, bis ein Minimum auf einem Detektorbereich gemessen wird. Dieses Minimum ist ein Hinweis auf ein maximales Beschatten des Direktstrahls, sodass die Korona, falls vorhanden, möglichst symmetrisch um den Beamstop erkennbar ist.

Für jeden Beamstop kann in der Software ein X-/Y-Parametersatz abgelegt werden. Dadurch darf die Montagegenauigkeit der Beamstop-Teile bei der Montage bzw. einem Wechsel gering sein.

Alle Antriebsmotoren liegen außerhalb des Vakuums. Dadurch müssen die Motoren keine besonderen Vakuumanforderungen erfüllen. Die Kühlung der Motoren ist besser und der Wärmeeintrag der Motoren auf die Mechanik geringer. Dadurch sind thermische Effekte auf die Positionierung geringer.

Es gibt keine Kabel bzw. elektronischen Bauteile im Vakuum die durch Ausgasung das Vakuum verschlechtern bzw. vakuumtauglich sein müssen. Weitere Vorteile der Erfindung ergeben sich aus der Beschreibung und der Zeichnung.

Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert.

Es zeigen:
- Fig. 1: eine schematische räumliche Darstellung einer Ausführungsform des erfindungsgemäßen Röntgen-optischen Systems mit einer Strahlfänger-Anordnung mit vielen Strahlfängern unterschiedlicher Größe und/oder Geometrie auf einem Wechselträger;
- Fig. 2a: ein Röntgen-optisches System nach dem Stand der Technik gemäß Referenz [2] in schematischer räumlicher Darstellung;
- Fig. 2b: ein Röntgen-optisches System nach dem Stand der Technik gemäß Referenz [1] im schematischen Vertikalschnitt;
- Fig. 3: eine Ausführungsform der erfindungsgemäßen Strahlfänger-Anordnung mit linearen Schlittenführungen für translatorische XY-Verschiebungen des Wechselträgers im schematischen Vertikalschnitt;
- Fig. 4: eine Ausführungsform der erfindungsgemäßen Strahlfänger-Anordnung mit einem über ein Band oder eine Kette angetriebenem Wechselträger im schematischen Vertikalschnitt;
- Fig. 5: eine Ausführungsform der erfindungsgemäßen Strahlfänger-Anordnung mit rastbarem Trägerrad und über ein Schrittgetriebe angetriebenem Wechselträger mit Kreuzschlitten in schematischer, räumlicher Darstellung;
- Fig. 6a: die Ausführungsform von Fig. 5 mit einer Kreuzschlitten-Kupplung in einer um 90° gedrehten schematischen, teilweise durchbrochenen räumlichen Darstellung; und
- Fig. 6b: eine 2:1-Vergrößerung des Bildabschnitts mit der Kreuzschlitten-Kupplung von Fig. 6a.

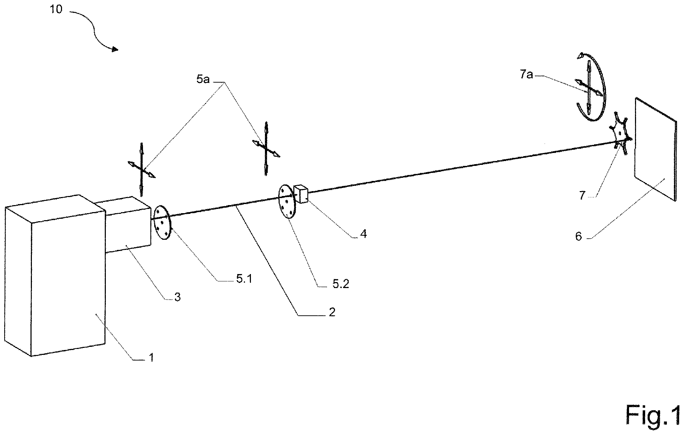

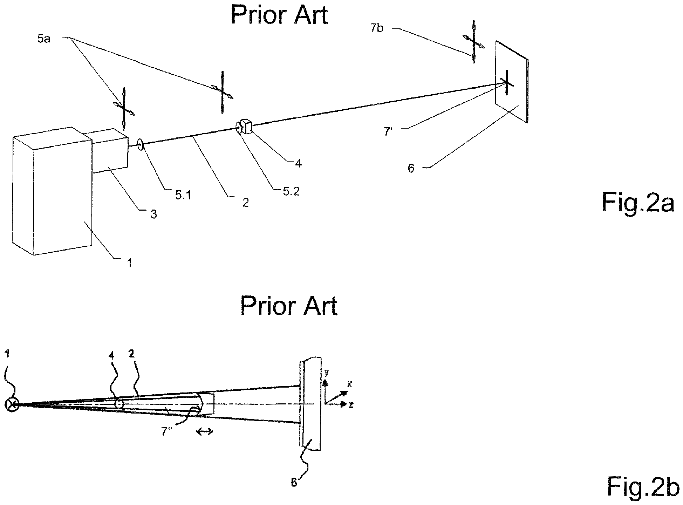

Die Figuren 1 und 3 bis 6b der Zeichnung zeigen jeweils in einer schematischen Ansicht in unterschiedlichem Detail bevorzugte Ausführungsformen der erfindungsgemäßen Strahlfänger-Anordnung für ein **Röntgen-optisches System 10,** während die Figuren 2a und 2b jeweils ein generisches Röntgen-optisches System nach dem Stand der Technik gemäß Referenz [2] beziehungsweise Referenz [1] darstellen.

Das in **Fig. 2a** gezeigte bekannte Röntgen-optische System mit Strahlfänger-Anordnung gemäß Referenz [2] ("NanoStar") umfasst eine **Röntgen-Quelle 1** mit vorgeschalteter **Quellen-Optik 3** zur Formung des primären **Röntgenstrahls 2.** Dieser folgen in Strahlrichtung gesehen **eine erste Blende 5.1** sowie eine **zweite Blende 5.2**, welche zur weiteren Strahlformung noch vor der zu vermessenden **Probe 4** im Primärstrahl 2 angeordnet sind und die in Fig. 2a als Pfeilkreuze angedeuteten **translatorischen Freiheitsgrade 5a** besitzen.

Nach der Probe 4 ist unmittelbar vor der empfindlichen Fläche eines **Röntgen-Detektors 6** ein in einer xy-Ebene senkrecht zu einer z-Richtung justierbarer **Strahlfänger 7'** angeordnet, welcher der optimalen Einstellung des Verhältnisses von auf die empfindliche Fläche gelangender Nutzstrahlung zur Störstrahlung des Röntgenstrahls 2 in z-Richtung dient. Die **Freiheitsgrade 7b** des Strahlfängers 7' zur Verschiebung in x- und y-Richtung sind wiederum als Pfeilkreuz angedeutet.

Das in **Fig. 2b** gezeigte bekannte Röntgen-optische System mit Strahlfänger-Anordnung gemäß Referenz [1]. Hier besitzt der **Strahlfänger 7**" nur einen einzigen translatorischen Freiheitsgrad, indem er in z-Richtung auf der z-Achse (=Strahlachse) vor- und zurück bewegbar ist, was Fig. 2b mit einem Doppelpfeil andeutet.

Die vorliegende Erfindung erweitert diese an sich bekannten Anordnungen um folgende erfindungswesentlichen Elemente: Die erfindungsgemäße Strahlfänger-Anordnung zeichnet sich gegenüber den Vorrichtungen aus dem Stand der Technik dadurch aus, dass Strahlfänger-Anordnung eine **Mehrzahl von Strahlfängern 7** unterschiedlicher Größe und/oder Geometrie aufweist, welche auf einem Wechselträger angeordnet sind und sowohl **translatorische als auch rotatorische Freiheitsgrade 7a** besitzen, wie in **Fig. 1** als Pfeilkreuz mit umgebenden Rotationspfeil dargestellt.

Alternativ können die Strahlfänger 7 auf einem Träger angebracht sein, der mittels Stellmotoren rein translatorisch in XY-Richtung bewegt werden kann. Zum Wechseln der unterschiedlichen Strahlfänger würde dann ein Stellmotor einen längeren Weg nehmen, um die einzelnen Strahlfänger im Strahlengang derart zu positionieren, dass die benachbarten Strahlfänger die Detektorfläche nicht beschatten. Die Strahlfänger müssen dann in größerem Anstand angeordnet werden. Alternativ könnte man auf eine kleinere Anzahl von Strahlfängern auf dem Träger reduzieren, beispielsweise drei.

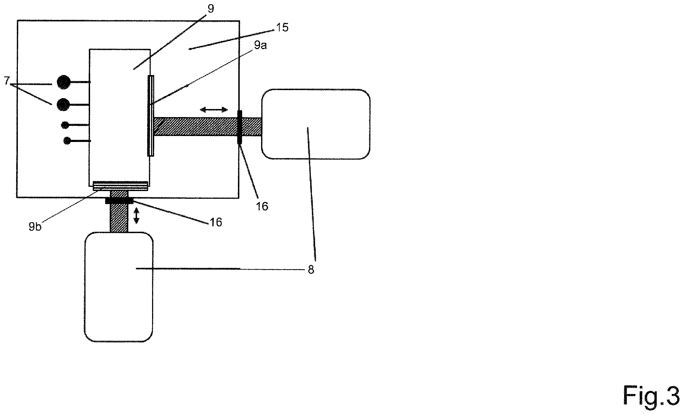

Wie in der Ausführungsform von **Fig. 3** gezeigt, kann der Wechselträger auf einem mittels einer Antriebseinrichung mit mindestens einem **Stellmotor 8; 8'; 8"** in der xy-Ebene sowohl in x- als auch in y-Richtung verschiebbaren **Schlitten 9** montiert sein. Der Schlitten 9 wird auf **Schlittenschienen 9a, 9b** bewegt und ist mit dem Wechselträger in einem **Vakuumbereich 15** angeordnet, während sich die Stellmotoren 8 der Antriebseinrichung in einem Bereich mit Raumdruck befinden. Die Stellmotoren 8 übertragen die Antriebsbewegung des Schlittens 9 über -in der Zeichnung mit dunkler Schraffur angedeutete- Stellglieder, insbesondere Stößel, vom Raumdruckbereich in den Vakuumbereich 15, wobei die Stellglieder mit, vorzugsweise von außen montierbaren, **Vakuumdichtungen 16** am Übergangsbereich von Raumdruck zum Vakuumbereich 15 abgedichtet sind.

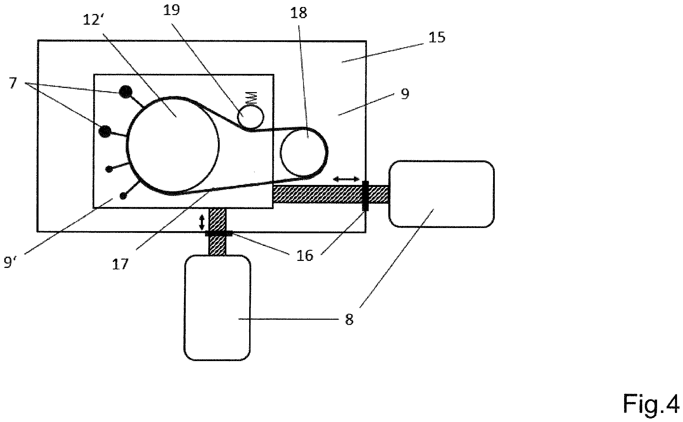

Bei der Ausführungsform nach **Fig. 4** ist der Schlitten mit dem Wechselträger als **Kreuzschlitten 9'** ausgeführt. Der Wechselträger umfasst hier eine vorspannbare Band- oder Kettenvorrichtung 17, auf der die Strahlfänger 7 von jeweils unterschiedlicher Größe und/oder Geometrie montiert sind. Bei dieser Ausführungsform erfolgt der Antrieb durch eine vorspannbare Band- oder Kettenvorrichtung 17, die mittels eines Antriebsrads 18 angetrieben wird und über ein **Trägerrad 12'** geführt ist. Vorteilhaft an dieser Ausführung ist auch, dass durch die Federvorspannung des Spannrads 19 das Band (Kette oder Riemen) immer auf Spannung gehalten werden kann, wenn die Stellmotoren 8 den Schlitten 9' ausrichten. Eine Kupplung mit Radialversatz ist nicht erforderlich, wenn das Antriebsrad 18 sich nicht auf dem Schlitten 9' befindet.

**Fig. 5** zeigt eine Ausführungsform der erfindungsgemäßen Strahlfänger-Anordnung, bei welcher die Übertragung der Bewegung von den Stellmotoren 8 auf den Wechselträger über ein **Schrittgetriebe 13** erfolgt, insbesondere ein Malteserkreuz-Getriebe mit vorzugsweise einem **DC-Elektromotor 8'** zum rotatorischen Antrieb des **Trägerrads 12** sowie zwei weiteren **Motoren 8"** für die linearen Translationsbewegungen. Das Getriebe 13 kann zusätzlich über eine Kupplung mit Radialversatz, vorzugsweise eine **Kreuzschieberkupplung 14** oder ein Kardangelenk, angetrieben werden.

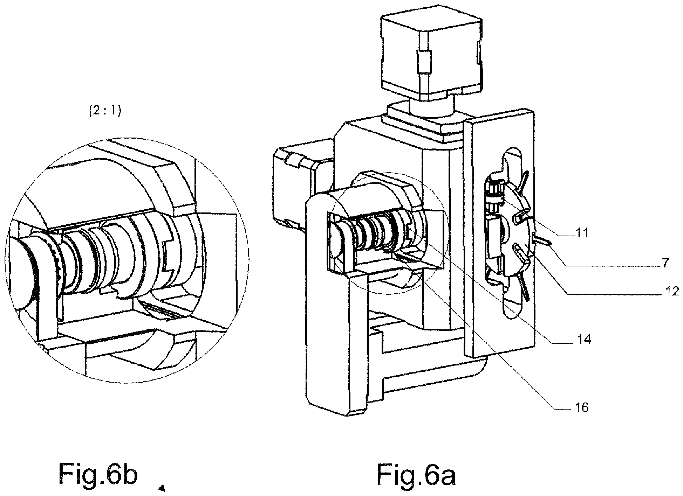

In **Fig. 6a** ist die Ausführungsform nach Fig. 5 um 90° um eine Vertikalachse verdreht dargestellt. Man erkennt hier auch einen **Rastmechanismus 11** zur Festlegung einer gewählten Position des Wechselträgers sowie Details der Kreuzschieberkupplung 14, die um einen Faktor 2 vergrößert auch in **Fig. 6b** gezeigt ist.

Eine Schwierigkeit, die sich beim Antrieb des rotierbaren Trägers über ein Malteserkreuz-Getriebe 13 ergibt, liegt darin, dass bei Verschiebung des Schlittens 9 auch die Drehachse des Antriebs verschoben wird. Daher soll hier eine Kupplung eingesetzt werden, die einen Radialversatz zulässt, wie z. B. die oben beschriebene Kreuzschieberkupplung 14 (beispielsweise in Form einer sogenannten Oldham Kupplung). Kreuzschieberkupplungen haben den Vorteil der winkeltreuen Übertragung und einer kompakten Bauweise. Die Verwendung eines Kardangelenks ist ebenfalls möglich, jedoch weniger bevorzugt, da die Winkelübertragung nicht synchron ist und zudem einen größeren Bauraum notwendig macht. Dadurch kann die Antriebsachse in das Vakuumgehäuse ragen und mit einer entsprechenden Dichtung gegenüber dem Umgebungsdruck abgedichtet werden. Diese Antriebsasche überträgt die Drehbewegung auf die Kreuzschieberkupplung und diese ihrerseits auf das Schrittgetriebe, das den rotierbaren Träger bewegt.

### Bezugszeichenliste

- 1: Röntgen-Quelle
- 2: Primärstrahl
- 3: Quellen-Optik
- 4: Probe
- 5.1: erster Blendensatz
- 5.2: zweiter Blendensatz
- 5a: Freiheitsgrade der Blenden
- 6: Röntgen-Detektor
- 7: Strahlfänger (=Beamstop) der Erfindung
- 7`: Strahlfänger (=Beamstop) gemäß Referenz [2]
- 7": Strahlfänger (=Beamstop) gemäß Referenz [1]
- 7a: Freiheitsgrade des erfindungsgemäßen Strahlfängers
- 7b: Freiheitsgrade des Strahlfängers gemäß Referenz [1]
- 8: Stellmotoren
- 8': Motor für Rotation, DC-Motor
- 8": Motoren für Translation
- 9: Schlitten
- 9': Kreuzschlitten
- 9a, 9b: Schlittenschienen
- 10: Röntgen-optisches System
- 11: Rastmechanismus
- 12, 12`: Trägerrad
- 13: Schrittgetriebe, Malteserkreuz-Getriebe
- 14: Kreuzschieberkupplung
- 15: Vakuumbereich
- 16: Vakuumdichtungen
- 17: Band, Kette
- 18: Antriebsrad
- 19: Spannrad

### Referenzliste:

[1] US 7,295,650 B2; US 2004/0206908 A1
[2] https://my.bruker.eom/acton/attachment/2655/f-0e4e/1
   ("NANOGRAPHY - TWO DIMENSIONAL SCANNING SAXS WITH THE NANOSTAR" in Lab Report XRD 43"); und
   ("2GI-SAXS with NANOSTAR - a Synchrotron Method in the Lab" in Lab Report XRD 62), jeweils abgerufen am 03.06.2019;
   https://my.bruker.com/acton/attachment/2655/f-0e4c/1
   ("High Temperature in-situ GI-SAXS on W/C multilayer coatings in NANOSTAR" in Lab Report XRD 69), abgerufen am 03.06.2019
[3] WO 96/42088 A1
[4] Hendrik Lindemann: "Entwicklung eines Positioniersystems für ein Absorptionselement im Hochvakuum", Masterarbeit, 1. Januar 2018 (2018-01-01), Seiten I-X, 1-117, XP055712843, D01: 10.3204/PUBDB-2018-02731.

## Patentansprüche

1. Strahlfänger-Anordnung für ein Röntgen-optisches System mit einem Vakuumgehäuse und mit mindestens einem in einer xy-Ebene senkrecht zu einer z-Richtung justierbaren Strahlfänger zur optimalen Einstellung des Verhältnisses von auf eine Fläche gelangender Nutzstrahlung zur Störstrahlung eines Röntgenstrahls in z-Richtung, wobei die Strahlfänger-Anordnung eine Mehrzahl von Strahlfängern unterschiedlicher Größe und/oder Geometrie aufweist, welche auf einem Wechselträger angeordnet sind, der auf einem mittels einer Antriebseinrichung mit mindestens zwei Stellmotoren in der xy-Ebene verschiebbaren Schlitten montiert ist,
**dadurch gekennzeichnet,**
**dass** der Schlitten mit dem Wechselträger im Vakuum und die Stellmotoren der Antriebseinrichung in einem Bereich mit Raumdruck angeordnet sind, wobei sich der Schlitten und der bewegliche Wechselträger innerhalb des Vakuumgehäuses befinden, während die Stellmotoren bei Raumdruck außerhalb am Gehäuse angebracht sind,
und **dass** die Stellmotoren die Antriebsbewegung des Schlittens über Stellglieder, insbesondere Stößel, vom Raumdruckbereich ins Vakuum übertragen, wobei Dichtungen am Vakuumgehäuse am Übergangsbereich von Raumdruck zum Vakuum vorhanden sind, mittels denen die Stellglieder abgedichtet sind.

2. Strahlfänger-Anordnung nach Anspruch 1, **dadurch gekennzeichnet, dass** zur Positionierung jeweils eines ausgewählten Strahlfängers im Strahlengang des Röntgen-optischen Systems ein Antrieb mit Stellmotor, vorzugsweise mit Schrittmotor, vorhanden ist, und dass der Schlitten mit dem Wechselträger sowohl in x- als auch in linear verschiebbar ist.

3. Strahlfänger-Anordnung nach einem der vorhergehenden Ansprüche, **dadurch gekennzeichnet, dass** ein Rastmechanismus zur Festlegung einer gewählten Position des Wechselträgers vorhanden ist.

4. Strahlfänger-Anordnung nach einem der vorhergehenden Ansprüche, **dadurch gekennzeichnet, dass** der Wechselträger ein drehbares Trägerrad umfasst, an dessen Umfang mehrere Strahlfänger von jeweils unterschiedlicher Größe und/oder Geometrie angeordnet sind.

5. Strahlfänger-Anordnung nach Anspruch 4, **dadurch gekennzeichnet, dass** ein Malteserkreuz-Getriebe mit vorzugsweise einem DC-Elektromotor zum Antrieb des Trägerrads vorhanden ist.

6. Strahlfänger-Anordnung nach Anspruch 5, **dadurch gekennzeichnet, dass** das Malteserkreuz-Getriebe zusätzlich über eine Kupplung mit Radialversatz, vorzugsweise eine Kreuzschieberkupplung oder ein Kardangelenk, angetrieben ist.

7. Strahlfänger-Anordnung nach Anspruch 4, **dadurch gekennzeichnet, dass** ein Zahnradgetriebe mit Rastpositionen und vorzugsweise einem DC-Elektromotor zum Antrieb des Trägerrads vorhanden ist.

8. Strahlfänger-Anordnung nach einem der Ansprüche 1 bis 3, **dadurch gekennzeichnet, dass** der Wechselträger eine vorspannbare Band- oder Kettenvorrichtung umfassst, auf der die Strahlfänger montiert sind.

9. Röntgen-optisches System, insbesondere Röntgen-Diffraktometer, mit einer Röntgen-Quelle (1), von der Röntgenstrahlung als Primärstrahl (2) auf eine zu untersuchende Probe (4) geführt wird, mit einem Röntgen-Detektor (6) zum Empfang von an der Probe (4) gebeugter oder gestreuter Röntgenstrahlung, wobei die Röntgen-Quelle (1), die Probe (4) und der Röntgen-Detektor (6) auf einer z-Achse angeordnet sind, wobei zwischen der Probe (4) und dem Röntgen-Detektor (6) ein Strahlfänger nach einem der vorhergehenden Ansprüche vorhanden ist.

10. Röntgen-optisches System nach Anspruch 9, **dadurch gekennzeichnet, dass** das Röntgen-optische System zur Messung von Kleinwinkel-Streuung, insbesondere zwischen 0,05° und 14°, vorzugsweise zwischen 0,1° und 5°, eingerichtet ist.

11. Röntgen-optisches System nach einem der Ansprüche 9 oder 10, **dadurch gekennzeichnet, dass** die Strahlfänger-Anordnung auf der z-Achse unmittelbar vor dem Röntgen-Detektor (6) angeordnet ist.

12. Röntgen-optisches System nach einem der Ansprüche 9 bis 11, **dadurch gekennzeichnet, dass** eine Ausrichtungsvorrichtung vorhanden ist, mit welcher die Stellmotoren der Strahlfänger-Anordnung den jeweils ausgewählten Strahlfänger im Röntgenstrahl positionieren können.

13. Röntgen-optisches System nach einem der Ansprüche 9 bis 12, **dadurch gekennzeichnet, dass** eine Auswerteeinheit vorhanden ist, mit der die Intensität der auf einer ausgewählten Detektorfläche des Röntgen-Detektors (6) eintreffenden Röntgenstrahlung bei einer bestimmten Position des ausgewählten Strahlfängers der Strahlfänger-Anordnung ausgewertet werden kann.

14. Röntgen-optisches System nach einem der Ansprüche 9 bis 13, **dadurch gekennzeichnet, dass** im Primärstrahlpfad vor der Probe (4) mehrere verstellbare Blenden mit unterschiedlichen Öffnungen angeordnet sind.

## Claims

1. A beamstop arrangement for an x-ray-optical system having a vacuum housing and at least one beamstop adjustable in an xy plane perpendicular to a z direction for optimum setting of the ratio of useful radiation reaching a surface to interfering radiation of an x-ray beam in the z direction, wherein the beamstop arrangement comprises a plurality of beamstops of differing size and/or geometry, which are arranged on an exchanging mount, which is installed on a carriage displaceable in the xy plane by means of a drive unit having at least two positioning motors, **characterized in**
**that** the carriage having the exchanging mount is arranged in vacuum and the positioning motors of the drive unit are arranged in a region having room pressure, wherein the carriage and the movable exchanging mount are located within the vacuum housing whereas the positioning motors are arranged at room pressure outside on the housing,
and in that the positioning motors transmit the drive movement of the carriage via positioning elements, in particular tappets, from the room pressure region into the vacuum, wherein seals are provided on the vacuum housing at the transition region between room pressure and vacuum, by means of which the positioning elements are sealed.

2. The beamstop arrangement as claimed in claim 1, **characterized in that** a drive having positioning motor, preferably having stepping motor, is provided for positioning a selected beamstop in the beam path of the x-ray-optical system in each case, and that the carriage is linearly displaceable with the exchanging mount both in the x direction and also in the y direction.

3. The beamstop arrangement as claimed in any one of the preceding claims, **characterized in that** a lock mechanism is provided for fixing a selected position of the exchanging mount.

4. The beamstop arrangement as claimed in any one of the preceding claims, **characterized in that** the exchanging mount comprises a rotatable carrier wheel, on the circumference of which multiple beamstops each of differing size and/or geometry are arranged.

5. The beamstop arrangement as claimed in claim 4, **characterized in that** a Maltese cross gearing preferably having a DC electric motor for driving the carrier wheel is provided.

6. The beamstop arrangement as claimed in claim 5, **characterized in that** the Maltese cross gearing is additionally driven via a coupling having radial offset, preferably a compound slide coupling or a universal joint.

7. The beamstop arrangement as claimed in claim 4, **characterized in that** a gear drive having lock positions and preferably a DC electric motor is provided for driving the carrier wheel.

8. The beamstop arrangement as claimed in any one of claims 1 to 3, **characterized in that** the exchanging mount comprises a belt or chain device, which can be pretensioned, and on which the beamstops are installed.

9. An x-ray-optical system, in particular an x-ray diffractometer, having an x-ray source (1), from which x-ray radiation is guided as a primary beam (2) onto a sample (4) to be studied, having an x-ray detector (6) for receiving x-ray radiation diffracted or scattered at the sample (4), wherein the x-ray source (1), the sample (4), and the x-ray detector (6) are arranged on a z axis, and wherein a beamstop as claimed in any one of the preceding claims is provided between the sample (4) and the x-ray detector (6).

10. The x-ray-optical system as claimed in claim 9, **characterized in that** the x-ray-optical system is configured for measuring small angle scattering, in particular between 0.05° and 14°, preferably between 0.1° and 5°.

11. The x-ray-optical system as claimed in either one of claims 9 or 10, **characterized in that** the beamstop arrangement is arranged on the z axis directly in front of the x-ray detector (6).

12. The x-ray-optical system as claimed in any one of claims 9 to 11, **characterized in that** an alignment device is provided, using which the positioning motors of the beamstop arrangement can position the respective selected beamstop in the x-ray beam.

13. The x-ray-optical system as claimed in any one of claims 9 to 12, **characterized in that** an analysis unit is provided, using which the intensity of the x-ray radiation incident on a selected detector surface of the x-ray detector (6) can be analyzed in a defined position of the selected beamstop of the beamstop arrangement.

14. The x-ray-optical system as claimed in any one of claims 9 to 13, **characterized in that** multiple adjustable apertures having different openings are arranged in the primary beam path in front of the sample (4).

## Revendications

1. Agencement de collecteur de faisceau pour un système optique à rayons X, comprenant un boîtier sous vide et au moins un collecteur de faisceau réglable dans un plan xy perpendiculairement à une direction z et permettant un ajustement optimal du rapport entre le rayonnement utile arrivant sur une surface et le rayonnement parasite d'un faisceau de rayons X dans la direction z, l'agencement de collecteur de faisceau présentant une pluralité de collecteurs de faisceau de tailles et/ou de géométries différentes qui sont agencés sur un support interchangeable monté sur un chariot déplaçable dans le plan xy au moyen d'un dispositif d'entraînement comprenant au moins deux servomoteurs,
**caractérisé en ce que**
le chariot avec le support interchangeable est agencé dans le vide et les servomoteurs du dispositif d'entraînement sont agencés dans une région à pression ambiante, le chariot et le support interchangeable mobile se trouvant à l'intérieur du boîtier sous vide, tandis que les servomoteurs sont installés à pression ambiante à l'extérieur du boîtier, et **en ce que** les servomoteurs transmettent le mouvement d'entraînement du chariot depuis la région à pression ambiante jusqu'au vide par l'intermédiaire d'actionneurs, en particulier de poussoirs, lesdits actionneurs étant rendus étanches grâce à des joints présents sur le boîtier sous vide au niveau de la région de transition entre la pression ambiante et le vide.

2. Agencement de collecteur de faisceau selon la revendication 1, **caractérisé en ce qu'**un entraînement comprenant un servomoteur, de manière préférée un moteur pas-à-pas, est fourni afin de positionner respectivement un collecteur de faisceau sélectionné sur le trajet de faisceau du système optique à rayons X, et **en ce que** le chariot peut être déplacé avec le support interchangeable de manière linéaire dans la direction x et également dans la direction y.

3. Agencement de collecteur de faisceau selon l'une quelconque des revendications précédentes, **caractérisé en ce qu'**un mécanisme d'encliquetage permettant de déterminer une position sélectionnée du support interchangeable est fourni.

4. Agencement de collecteur de faisceau selon l'une quelconque des revendications précédentes, **caractérisé en ce que** le support interchangeable comprend une roue porteuse rotative à la périphérie de laquelle sont agencés plusieurs collecteurs de faisceau de tailles et/ou de géométries différentes.

5. Agencement de collecteur de faisceau selon la revendication 4, **caractérisé en ce qu'**un mécanisme en croix de Malte, comprenant de manière préférée un moteur électrique à courant continu permettant d'entraîner la roue porteuse, est fourni.

6. Agencement de collecteur de faisceau selon la revendication 5, **caractérisé en ce que** le mécanisme en croix de Malte est en outre entraînée par un accouplement présentant un décalage radial, de manière préférée un accouplement à coulisse croisée ou un joint de Cardan.

7. Agencement de collecteur de faisceau selon la revendication 4, **caractérisé en ce qu'**un mécanisme à engrenages, avec des positions d'encliquetage et de manière préférée un moteur électrique à courant continu permettant d'entraîner la roue porteuse, est fourni.

8. Agencement de collecteur de faisceau selon l'une quelconque des revendications 1 à 3, **caractérisé en ce que** le support interchangeable comprend un dispositif à bande ou à chaîne pouvant être précontraint et sur lequel sont montés les collecteurs de faisceau.

9. Système optique à rayons X, en particulier diffractomètre à rayons X, avec une source de rayons X (1) à partir de laquelle les rayons X sont dirigés sous forme de faisceau primaire (2) sur un échantillon (4) à examiner, avec un détecteur de rayons X (6) permettant de recevoir des rayons X diffractés ou diffusés sur l'échantillon (4), la source de rayons X (1), l'échantillon (4) et le détecteur de rayons X (6) étant agencés sur un axe z, un collecteur de faisceau selon l'une quelconque des revendications précédentes étant fourni entre l'échantillon (4) et le détecteur de rayons X (6).

10. Système optique à rayons X selon la revendication 9, **caractérisé en ce que** le système optique à rayons X est conçu pour mesurer la diffusion aux petits angles, en particulier entre 0,05° et 14°, de manière préférée entre 0,1° et 5°.

11. Système optique à rayons X selon l'une quelconque des revendications 9 ou 10, **caractérisé en ce que** l'agencement de collecteur de faisceau est agencé sur l'axe z immédiatement avant le détecteur de rayons X (6).

12. Système optique à rayons X selon l'une quelconque des revendications 9 à 11, **caractérisé en ce qu'**un dispositif d'alignement est fourni, avec lequel les servomoteurs de l'agencement de collecteur de faisceau peuvent positionner le collecteur de faisceau respectivement sélectionné dans le faisceau de rayons X.

13. Système optique à rayons X selon l'une quelconque des revendications 9 à 12, **caractérisé en ce qu'**une unité d'évaluation est fournie, avec laquelle l'intensité des rayons X impactant une surface de détecteur sélectionnée du détecteur de rayons X (6) peut être évaluée pour une position déterminée du collecteur de faisceau sélectionné de l'agencement de collecteur de faisceau.

14. Système optique à rayons X selon l'une quelconque des revendications 9 à 13, **caractérisé en ce que** plusieurs diaphragmes réglables présentant différentes ouvertures sont agencés sur le trajet de faisceau primaire avant l'échantillon (4).
